(19) Europäisches Patentamt
European Patent Office
Office européen des brevets

(11) **EP 3 082 090 A1**

(12) **EUROPEAN PATENT APPLICATION**
published in accordance with Art. 153(4) EPC

(43) Date of publication:
**19.10.2016 Bulletin 2016/42**

(21) Application number: **13899183.1**

(22) Date of filing: **09.12.2013**

(51) Int Cl.:
**G06Q 30/02** (2012.01)  **G06Q 50/32** (2012.01)

(86) International application number:
**PCT/ES2013/070856**

(87) International publication number:
**WO 2015/086859 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.**
**28013 Madrid (ES)**

(72) Inventors:
• **GARCÍA GÓMEZ, César**
  **E-28013 Madrid (ES)**
• **IZQUIERDO MARTIN, Isabel, María**
  **E-28013 Madrid (ES)**
• **ARMENTA LOPEZ DE VICUÑA, Ana**
  **E-28013 Madrid (ES)**

(74) Representative: **Herrero & Asociados, S.L.**
  **Alcalá 35**
  **28014 Madrid (ES)**

(54) **METHOD FOR DETERMINING A USER PROFILE IN RELATION TO CERTAIN WEB CONTENT**

(57) The invention relates to a method for determining a user profile in relation to certain web content, according to the user's browsing data. The method comprising the following steps: classifying the browsing data according to content categories; extracting a first set of variables from the user's web browsing data for each category; assigning the user a ranking position for each of the categories, and comparing the first set of variables with the same variables of other users; calculating at least one correction factor for the user's ranking position in each category according to one or more time variables extracted from the web browsing data; recalculating the user's ranking position for each category, taking into account the correction factor calculated for each category; and determining the user profile on the basis of the user's ranking position calculated for each category.

FIG. 1

**Description**

Technical Field of the Invention

In general terms, the present invention relates to the use of Internet, and more specifically to the analysis of users' browsing data for the purpose of preparing user profiles indicating users' interests in web content.

Background of the Invention

Internet-related advertising systems today use user information increasingly more to adapt advertising in a virtually customized manner to each user and achieve more effective results. This user information is increasingly more complex given its wide variety, precision and, therefore, value. It is what is known as web user profile.

The web user profile has evolved over time; initially only demographic data of the users (age, sex, social economic status, place of residence ...), which were collected by means of subscriptions, surveys, audience panels or by extracting the information from contracts, were considered. In contrast, the web user profile is much more dynamic today and is constantly being adapted to the user, better yet, to the user's behavior with regard to the user's browsing on the Internet. It is referred to as "advanced interest profile" and takes their likes and preferences into account and basically entails associating each user with a set of web content in which the user is interested, at the same time the degree of interest therein.

Collecting data to build user profiles based on the users' browsing used to be done by embedding pieces of software in actual web sites that identified the user and sent the required information to external servers, where it was processed and the profile was built on the basis of that data compiled in all the web sites enabled for executing this collection system. Now, and as a result of the advancement in large data volume processing techniques, it is possible to process the users' web browsing logs, generated by network devices, both on a web site level, and on an Internet service provider level.

Web log files are an easy-to-handle data source, with a simple data format, and generally contain all the information necessary for doing a very complete user interest profiling. Each record of a web log file usually contains at least one user identifier, the requested resource, the date and the time at which the petition was made, the resource requested in the previous petition (referrer), the application the user is using, the size of the requested resource, the status code of the petition, etc...

The state of the art includes many proposals dealing with the creation of web user profiles. Many of them focus on the demographic profile of users browsing on the Internet, as is the case, for example, of patent publications EP 1710743 A1, US 20100299431 A1 and EP 1308870 A3. European patent application EP 1710743 A1 proposes a method and a system for providing, storing and managing a user profile, which can be accessed by different providers. United States patent application US 20100299431 A1 proposes a method for determining a user demographic profile of a user that visits one or more web pages of a predetermined group of web sites. It generates a first record of visits by the users to web sites and provides one or more profiles comprising the demographic characteristics of each web site, this data serving to estimate a user demographic profile of the user. Patent document EP 1308870 A3 also predicts the demographic information of an Internet user based on an analysis of visited web pages. However, profiles of this type are essentially static and cannot be used as directly for advertising services on the web as content interest profiles can, which have a much more direct relationship with the subject of the advertisements. In addition, a great deal of demographic data is provided directly by the user, or collected through questionnaires, which often casts doubt on the truthfulness thereof, or it is incomplete, and therefore the little reliability of this method in those cases must be taken into account.

Other proposals focus their browsing analysis on web site characterization, instead of on user characterization, so it is not possible to extract user profiles that can be used in another context that is not that of the actual web browsing on sites included in the analysis. This is a significant limitation of the usefulness of those analyses. This is the case of United States patent US 8190475 B1.

Classifying web sites in content categories often also presents difficulties and is a problem that is common to web content interest profiling systems. Content is classified by categories to be able to later differentiate users' interests, and dictionaries which generally associate each web domain with one or more categories arranged in a hierarchical manner are normally used. These dictionaries can be built manually or automatically, but they always take into account the content and subject of the web sites. In some cases the dictionary is classified by hand, but given the changing nature of the Internet, constant updating, which is quite costly, is necessary. This is the case with the solution described in European patent application EP 1216447 A2, which proposes a method and system providing user web profiles for the selective delivery of content (advertising) based on their profiles. The system uses information about the users' behavior collected at the users' point of connection to the Internet to profile their interests and demographic data.

In other cases, machine learning techniques are used to model the dictionary, which prevents having to constantly update it. However this entails enormous manually tagging work for the training data set on the basis of which the dictionary is built. This is the case of United States patent US 6539375 B2, which provides Internet user profiles according to predefined interest categories. It collects information relating to the content of an Internet user to finish by determining its relevance in said predefined interest categories. This relevance is indicated by analyzing different attributes of the information collected from the user and by generating a match between these attributes and the predefined categories in order to form a user profile which can ultimately be used to direct offers to users based on the profile.

The quality of the data can also be a problem, as user profiles can be notably falsified. Most network devices that generate web logs record for each petition for a resource web from the user several petitions for elements associated with said resource (images, style sheets, scripts...) which must be eliminated. The case is further complicated with iframes, which are HTML elements that allow inserting or embedding HTML documents within a main HTML document, where it is very difficult to determine if they are user accesses or banners embedded in the page requested by said user. If prior cleaning step (EP 1216447 A2 ) and a detection of the petitions actually made by the user (unique clicks) are not performed, the volume of information to be processed can become unmanageable, and the results will not reflect in a truthful manner the user's will, incorporating spurious elements that will falsify the result.

Many existing profiling systems have other drawbacks in the process of calculating the user's interest, using very basic interest computing techniques solely based on the browsing of the actual user (EP 1216447 A2, US20100138370A1), without using any type of comparison with the browsing of the remaining users, which could yield a relative measurement of the user's interest profile that is much more reliable.

Inventions of this type generally reduce their field of application to only the area of online advertising since they consider a single profile which, though it is constantly updated, it virtually does not take into account the history or the evolution of said profile. An example would be patent application US20100138370A1, which proposes a solution in which the user profile is retrieved from a database where it is continuously updated and can be accessed by an external ad server.

Based on the foregoing, it is obvious that there is a need in the state of the art for a complete solution for calculating web user profiles that is dynamic and flexible enough to be adapted to the changing needs of the consumers of said profiles.

Brief Description of the Invention

The present invention solves the aforementioned problems through a method for determining a user profile in relation to certain web content according to said user's browsing data. The method comprises the following steps performed by an electronic device:

a) classifying the browsing data according to content categories;
b) extracting a first set of variables from the user's web browsing data for each category;
c) assigning the user a ranking position for each of the categories, and comparing the first set of variables with the same variables of other users;
d) calculating a correction factor for the user's ranking position in each category according to one or more time variables extracted from the web browsing data;
e) recalculating the user's ranking position for each category, taking into account the correction factor calculated for each category;
f) determining the user profile on the basis of the user's ranking position calculated for each category.

The method of the invention can contemplate defining a time component, where the user's browsing data outside a period of time established by said time component is discarded for determining the user profile.

The categories of web content can be obtained by means of a content dictionary with a listing of web pages classified by categories.

The first set of variables extracted from a user's web browsing data can comprise data relating to: number of web pages visited by category, time and day; time consumed visiting web pages by category, time and day; and number of sessions in which web pages have been visited by category, time and day. Of course other variables could be elected, and the method would work in the same way, but these described variables are basic for at least one of the embodiments of the invention.

Optionally, in one of the possible embodiments of the invention, the positions of the users in the ranking of each category translate their interest in said category according to a series of interest tags; in this case, according to their position in the ranking, a tag with an interest that can have any group of scaled values, for example these 3 values: "High", "Medium" or "Low", is assigned to the user.

In one embodiment of the invention, a pre-processing of the web browsing logs is contemplated, which effectively filters the records corresponding to resources associated with spurious petitions from users (images, style sheets, scripts...) and even distinguishes in a large percentage of cases the records of actual accesses to web pages from those the generated by banners that are embedded in some pages using a complex heuristic based on the sequence of referrers. The method of the invention can thereby filter the browsing data before being classified by content categories. To that end, the following steps are also performed:

- normalizing the browsing data to a common format;
- discarding auxiliary data from the browsing data;
- associating the browsing data with user sessions identified from user inactivity periods;
- discarding browsing data accesses that were not requested by the user directly;

Additionally, once the ranking of the users in each category is calculated according to basic variables, the invention can comprise choosing one or more time variables that will additionally be taken into account. According to different embodiments of the invention, these time variables can be chosen from the following list: relative interest, progressive disregard, scattering factor, trend, automatic thresholds, inverse visitor frequency and sequential patterns.

The relative interest of a user in a category can be calculated as the time consumed by the user visiting web pages from said category in relation to the total browsing time of the same user for a pre-established period.

According to one of the embodiments of the invention, the progressive disregard of a user for a pre-established period of time is calculated as the sum of the values of the first set of variables, weighted such that a variable has greater weight the closer it is to a moment of calculation.

According to one of the embodiments of the invention, the scattering factor of a user for a pre-established period of time is proportional to a number of time units of the established period of time in which there is browsing activity.

According to one of the embodiments of the invention, the trend of a user for a pre-established period of time is calculated according to the value of the first set of variables in different time units within the pre-established time. If it is verified that the values increase upon approaching a moment of calculation, a positive factor is obtained, otherwise, a negative factor is obtained.

According to one of the embodiments of the invention, the automatic thresholds for a category for a pre-established period of time are established according to the number of users in the ranking.

According to one of the embodiments of the invention, the inverse visitor frequency for a category for a pre-established period of time is calculated according to a user's visits in relation to a total number of visits to said category by the rest of users during the pre-established period of time.

According to one of the embodiments of the invention, the sequential patterns for a pre-established period of time are calculated by comparing the values of the first set of variables in different time patterns.

A second aspect of the invention relates to an electronic device for determining a user profile in relation to certain web content according to said user's browsing data. The electronic device comprises:

- a profiling module classifying the browsing data according to content categories; extracting a first set of variables from the user's web browsing data for each category; assigning the user a ranking position for each of the categories, and comparing the first set of variables with the same variables of other users; recalculating the user's ranking position for each category, taking into account a correction factor calculated for each category by a correction module; and determining the user profile on the basis of the user's ranking position calculated for each category;
- a correction module calculating a correction factor for the user's ranking position in each category according to one or more time variables extracted from the web browsing data.

A final aspect of the invention relates to a computer program product comprising computer program code suitable for carrying out the method according to any of claims of the method when said program code is executed in a computer, a digital signal processor, a field-programmable gate array, an application-specific integrated circuit, a microprocessor, a microcontroller or any other form of programmable hardware.

The user profile obtained by the system of the present invention is based on data collected directly from the user's browsing, in a manner that is transparent for the user, such that it expresses the intentions, preferences and likes of the user without any type of doubt, unlike the user information collected in forms, which is often incomplete and very difficult to update. This profile contains the users' browsing preferences, likes and interests in different content categories, said information having a much more direct application than demographic profiles, in the world of advertising.

The user profiles that are offered are calculated for each of the users accessing the Internet through an Internet service provider (ISP), leaving user identifiers anonymous if this is required by privacy provisions, and said profiles can be consumed by any system in which it is deemed convenient, such as a CRM marketing module, a data warehouse, an ad server, etc.

Unlike many other systems of this type, the method of calculating the interest profile of web users in this invention not only takes into account the browsing of the actual user, which is the most common, but it also uses the browsing data of other users to take a relative measurement of the user's interests.

A huge technical advantage that is proposed with this invention is that the user profile that is offered is not unique, but rather takes into account, in addition to the latest activity data of the user received, the impact of what are referred to as "time components" on the user's interests, distinguishing at its output between short-term (day of the month, day of the week, time slot...), mid-term (week...) or long-term (month...) profiles. This management of data in a time context makes it advisable for the system to have a historical profile database in one of the embodiments, which can feed different predictive algorithmic analysis techniques, thereby enriching the original profiles.

On a functional level, the invention stands out due to its versatility since it allows the end consumer of the profiles to decide which profiles by time component are desired, and which time variables (dimensions) the end consumer activates in calculating the users' interests. Therefore, the system is versatile from dual point of view: it offers many possibilities of calculating the profile, as well as several ways of presenting the results, being adapted to the end customer's needs at all times. One of the advantages of this dual versatility is that it does not limit the application of the results to on-line advertising, as occurs with most of the solutions on the market today.

Description of the Drawings

To complete the description that is being made and for the purpose of helping to better understand the features of the invention according to a preferred practical embodiment thereof, a set of drawings is attached to said description as an integral part thereof in which the following is depicted in an illustrative and non-limiting manner:

Figure 1 shows a block diagram with a general view of the invention according to one of the embodiments.
Figure 2 shows a flow chart with the processes that are performed in one embodiment of the invention from which the browsing data is captured until the profiles are finally prepared.
Figure 3 shows a high level block diagram representing the complete invention according to one of the embodiments of the invention.

Detailed Description of the Invention

The invention describes a process for calculating an advanced web content user interest profile on the basis of the analysis of the user's browsing data or browsing logs. Said advanced interest profile is multidimensional and comprises different time variables making it possible to choose a period of time or a combination of several periods according to application needs.

A possible embodiment of the invention that has a web content dictionary for associating each domain with one or more predefined categories will be described in detail below. According to one embodiment of the invention, said web content dictionary is a content dictionary based on the free product DMOZ, which contains over 5 million classified web sites and is updated monthly. Furthermore, since the coverage of the dictionary is upgradable and for the purpose of performing more frequent updates of unclassified domains, machine learning techniques are used that allow classifying unclassified web sites on the basis of those which are already classified in the dictionary by comparing the obtained web content. Manually tagging the training data set, which is a very costly operation, is thereby avoided.

The degree of interest that a user has in the previously established content categories is calculated on the basis of the browsing logs of said user. To that end, said dictionary is used, which allows knowing about the type of each of the web sites that the user browses.

Once the type of content the user has seen is known, in order to assess the user's interest, primarily the user's browsing data, such as the number of pages seen, browsing sessions and time accumulated in each of the categories in a period of time prior to the moment of the analysis, is taken into account.

The user's interest will be quantified in different levels, for example in this embodiment it is done in 3 levels (High, Medium, Low) by comparing different variables relating to the user's browsing (pages seen, sessions, duration...) with that the of rest of users for a period of study. Obviously this quantification in 3 levels does not have to be the only possible quantification and other measurement scales or levels can be established, such as a number scale from 1 to 10, for example. This implementation of ranking (High, Medium, Low) involves an initial reference, but it is subsequently modified by certain correction factors that are based on values that are more inherent to user browsing (time variables) when building the final interest profiling.

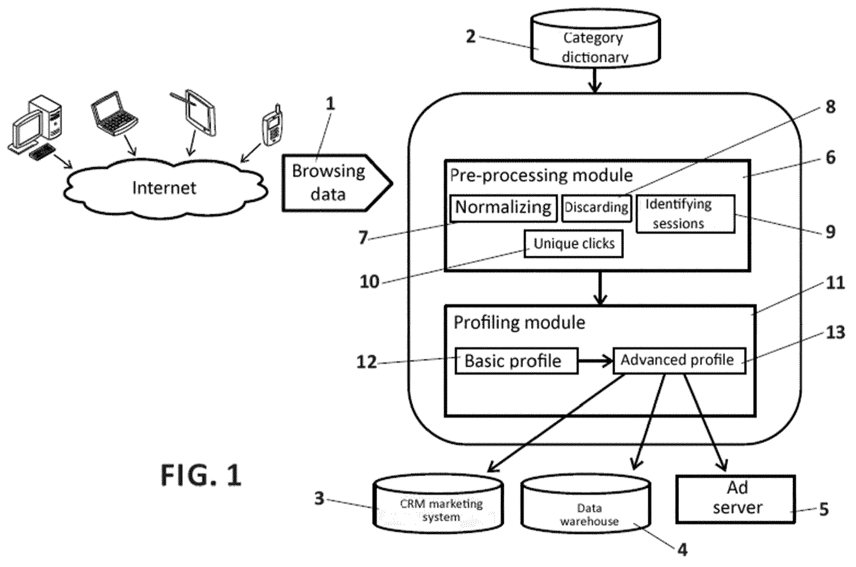

Therefore, as shown in Figure 1, in this embodiment there are 2 input data sources: the user's web browsing data or weblogs (1) and the dictionary of categories (2), classifying each web domain in one or more content categories.

As external systems, there can be a log collector system to provide the starting web logs, and a web site classifier to provide the starting web content dictionary.

Different systems can in turn be connected at the output that can be used to make the most of the user profiles, such as for example:

- a CRM (customer relationship management) marketing system (3), which may be required for direct marketing advertising campaigns, audience targeting taking into account audience preferences and likes.

- a data warehouse (4) in which historical web browsing profile data, along with other user data, can be stored, for example, to select advertising references based on the type of users visiting them (web content interest profiles). The data stored in the data warehouse can also be used to perform more complex analyses based on historical data that allows extracting another type of valuable information from the interests shown by users over time.
- an ad server (5) which may require user profiles for behavioral targeting or online advertising on web sites targeting users based on their behavior (web content interests, in this case).

Continuing with the embodiment of Figure 1, two large modules that will allow obtaining a complete user profile are described. These modules are:

- Pre-processing module (6): makes it possible for web logs to arrive being already filtered and duly treated at the input of the profiling module *per* se, performing the following functions:

  ◦ Normalizing (7): the input data is given a unified format so that the system can be coupled to different web log formats.
  ◦ Discarding (8): records constituting auxiliary user browsing elements are eliminated; they are usually resources associated with the page requested by the user, such as images, css or style sheets, javascript...
  ◦ Identifying sessions (9): the web logs are associated with user sessions or visits using thresholds of inactivity time between petitions for contiguous resources. This is a way of calculating the sessions, which is very widespread in web browsing analysis, and provides session information independence offered by some network devices, which sometimes do not fit with the reality of a browsing session "performed by a person", and which is not even available other times.
  ◦ Unique clicks (10): the web page that the user is actually requesting is identified by means of the application of complex heuristics, eliminating accesses to embedded pages (banners) and other elements associated with same.

- Profiling module (11): the profiling module *per se* calculates a user interest profile in relation to different web content categories from the user's web browsing logs by applying different techniques such as the one explained below herein. It consists of two main components:

  ◦ Basic profile (12): on the basis of the user's browsing data, and by crossing this data with the web content dictionary, this component calculates a first set of variables or basic variables, which will be used as a starting point to be able to obtain the profile.
  ◦ Advanced profile (13): in this component the variables making up the basic profile are combined with the time dimensions, which will give rise to the final user profile. Going into more detail about the fact that it is a complex profile, various profiles can be associated with one and the same user depending on the period of time that is used as the basis for the calculation. In any case, according to the preferred embodiment of this invention the user's interest in web content categories could be expressed as a set of tags as indicated below:

    ▪ H (High) High interest
    ▪ M (Medium) Medium interest
    ▪ L (Low) Low interest

  However, in other embodiments there could be another type of tagging and/or classification of the calculated profiles taking into consideration, for example, a harmonized range of values.

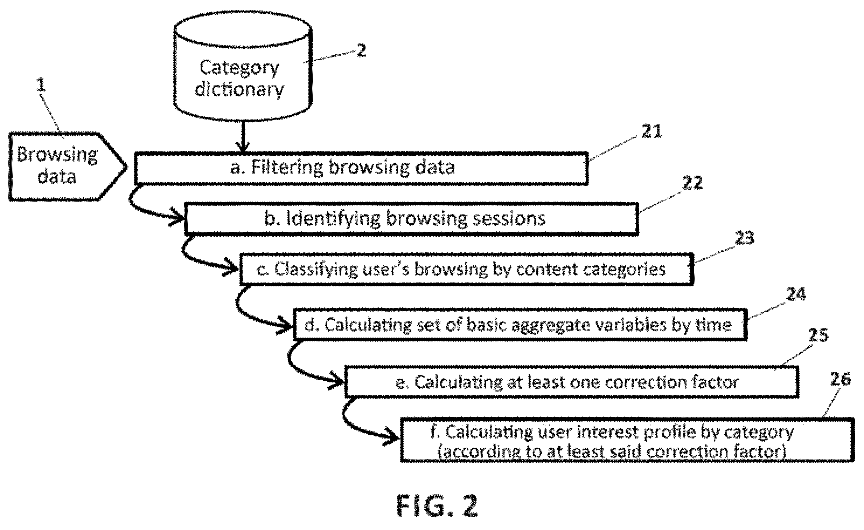

The flow chart that is followed from the time the web logs or browsing data enter the system until the user profiles are obtained at the output is depicted in Figure 2. Said Figure 2 shows the two inputs discussed above: the user's web browsing data or web logs (2) and the category dictionary (1); and according to one embodiment of the invention, firstly, and to make processing the data easier and to be adapted to different data sources, the data is subjected to a normalizing phase in which as a whole it is translated into a common format, and the data is then filtered (21), discarding the records of petitions for auxiliary resources from web pages and allowing only those records corresponding to petitions made by the users (unique clicks). Now with the data being clean, the user browsing sessions (22) are identified by analyzing user inactivity periods, and the time during which the user was visiting each page is in turn calculated by analyzing the time that lapses between consecutive petitions.

In the following step, the content dictionary is applied in order to obtain the category of each of the web sites visited by the users and thus classifying (23) user browsing by content categories. With this information, a first set of variables, i.e., the basic variables by category (for example number of pages seen, time consumed and number of sessions), is calculated (24) for each user and time.

At least one correction factor (25) is calculated for each user by using these basic variables and applying various algorithms according to other time variables.

Finally, the profiling method is applied to the correction factors, obtaining the profile (26) for each of the defined time components.

This process is cyclical and sequential, taking place every time there are web logs at the input of the system. The greater the data arrival frequency, the more updated the results of the profiles offered by the system will be.

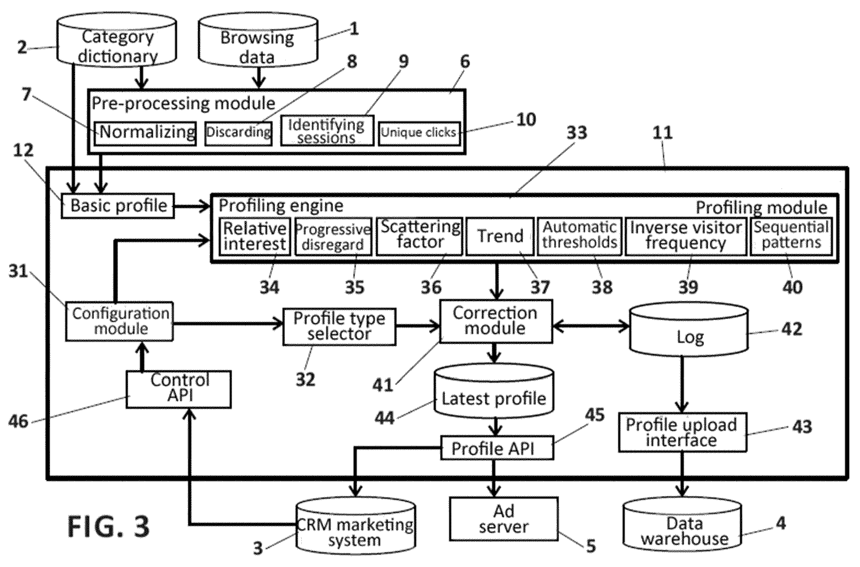

Figure 3 shows a high level design with all the process blocks comprising one embodiment of the invention:

- Basic profile (12): before starting to obtain the interest profile *per se,* calculations of basic variables (dimensions) relating to the users' web browsing must be performed for each of the users. As examples, it can be considered that the most suitable or useful dimensions are those mentioned below:

  • Number of pages seen by content category by time and day
  • Time consumed seeing pages of one category by time and day
  • Number of sessions in which web pages from one category have been visited by day

  However, the invention would also work with other dimensions, such as those combined with other periods of time (minutes, weeks, etc.), for example.

- Configuration module (31): the complete interest profile of each user is actually the combination of several dimensions that can make up the profile and are calculated on the basis of the user's browsing in different time periods (time component), which could be, for example, day of the month, day of the week, time slot, week of the month, month of the year... The configuration module has a dual functionality:

  • it allows selecting the time component for the calculation of profiles;
  • it allows activating or deactivating profile dimensions.

- Profile type selector (32): a time component giving rise to different interest profiles for one and the same user can be chosen, depending on the type of period chosen. These periods can be, for example:

  • Day of the month. Browsing on "n" previous days is taken into account.
  • Day of the week. Browsing on "n" days of the same type of day of the previous week, for example, the last four Tuesdays, is taken into account.
  • Type of day of the week: previously defining which days are classified as "business days", which are classified as "holidays" and which are defined as "weekends"
  • Time slot: browsing on n previous days in that time slot is taken into account.
  • Week of the month: "n" previous weeks, for example, the last three weeks, are taken into account
  • Month of the year: browsing in "n" previous months, for example, the last two months, is taken into account for the calculation.

  Each of these profiles can be used for different purposes independently or combined with one another in order to adjust the prediction of user interest for a day and/or time slot in the future with the highest possible accuracy.

- Profiling engine (33): starting from the web browsing logs and with a category dictionary classifying each web domain, the time (for example in seconds) and/or the number of pages seen which each user has been browsing in URLs associated with a specific category (or subcategory) is calculated. It establishes a ranking of users for that category and according to this embodiment, each user is assigned a tag H, M or L (High, Medium, Low), depending on the position the user occupies in said ranking. It is an example of qualitatively measuring the degree of starting interest the user has in that category, but any other quantitative or qualitative method could be used. The calculated degree of "initial" interest will be modified and complemented taking into account the following profile dimensions, based on time variables:

    ▪ Relative interest (34): this is a variable that has a positive influence on a user's degree interest in a category if a user's browsing in relation to that category is relatively quite large in relation to the rest of the user's browsing. It is calculated as the ratio of the time consumed by the user seeing web pages from said category to the same user's total browsing time in the period chosen for the calculation.

    For example, assuming that a given user has a level of browsing (pages seen or duration) in the category of "sports" that is not very high compared with the rest of the users, the user must initially have a low interest in said category, but if it is found through the analysis that the user has a fairly reduced Internet activity, and almost all of the user's visits are to sports pages, it may be appropriate to apply a correction factor based on "relative interest".

▪ Progressive disregard (35): the calculation of the degree of a user's initial interest in a category may inherently entail the application of a disregard factor. Only the browsing activity of the user in a period of time prior to the moment of calculation defined by configuration and referred to as "sample period" is taken into account. However, with the "progressive disregard" dimension, the disregard factor is more gradual and is applied within the actual sample period, giving more weight to the most recent activity (that activity closest to the moment of calculation). Therefore, the value of the basic variables (number of pages seen or the time consumed on web sites) for a specific category in a given moment, which is used as input in the ranking process, is calculated as the sum of the values of said variables in each of the time units of the sample period used for the calculation, multiplied by the inverse of the number of units up until the moment of calculation, plus one. For example, if *ic* is considered to be the moment of calculation, *p0* the unit of the period corresponding to the moment of calculation, *p-1* the unit of the period prior to the moment of calculation and so on and so forth to *p-n,* the formula for calculating the number of pages seen (*pv*) which would be considered in the calculation of interest, for a specific category could be:

$$pv\_ic = pv\_po \,/\, (0 + 1) + pv\_p\text{-}1 \,/\, (1 + 1) \ldots pv\_p\text{-}n \,/\, (n + 1)$$

The same applies for the calculation of the time consumed. As an example, it can be assumed that the chosen time component is "days" and that a user "user1" has interest from time to time in a specific category on the very day the sample period (seven days ago, for example) starts and has accumulated a high number of pages seen and browsing seconds in relation to that category that day, but has not visited it again in the entire week. Another user (user2) has experienced similar browsing, but just the day prior to the day on which the degree of interest is being calculated. In both cases, the degree of the user's initial interest would be the same, but, however, by applying a correction factor based on the "progressive disregard" time variable, the degree of user2's interest in said category will be greater than the degree of user1's interest.

▪ Scattering factor (36): another time variable entailing a dimension that places more value on a user's interest in a category if that interest is demonstrated not only in absolute values of duration or pages seen, but also by repeatedly accessing in several time units (days, sessions, ... according to the chosen time component). In other words, the value of the pages seen or the browsing time is multiplied by a factor proportional to the number of time units of the sample period contemplated in the calculation in which there is browsing activity before applying the ranking process.

As an example, assuming that the chosen time component is "days", assume that a user (user1) has interest from time to time in a specific category on one of the days of the sample and accumulates during that day a good number of pages seen and time (duration), while another user (user2) has activity similar to user1 overall, but, however user2 visits pages relating to that category every day of the sample. For user1 and user2, the degree of initial interest would be the same. However, by applying a correction factor based on the "scattering factor" variable, the degree of user2's interest in said category is increased.

▪ Trend (37): in the event that visits to a category are made in several time units within the sample period, it is possible to observe if there is an upward or downward trend in the user's interest (more/fewer pages seen and viewing time) and to also locate points of maximum interest. A positive trend in the user's browsing in a category will result in a correction factor that will increase the degree of the user's initial interest in that category, and a negative trend will lessen it.

▪ Automatic thresholds (38): in the ranking established for the calculation of the degree of initial interest, there may be categories for which the difference between users (with regard to duration and pages seen) is very minor such that there is hardly any difference between users that are in the last positions of one segment (assuming different levels as in the example of 3 H/M/L segments discussed above), and those which are in the first positions of the following segment. By establishing automatic thresholds, the cutoff points between interest segments (H/M/L levels for example) are not fixed percentages for each category, but rather they are considered different segments when a requirement of a minimum number of users in each one is met.

▪ Inverse visitor frequency (39): there are content categories with respect to which, due to their unpopularity, it may be considered that if a user visits them, albeit with little intensity, it is because the user actually has an interest in them. This is a concept similar to that of inverse document frequency (IDF) used in information retrieval: the less a term appears in the total set of documents, the more relevant it is if it is found in one of them. This variable can be used as an example for establishing a dimension that contemplates a ranking of categories by user in order to see which best characterize the user. Assume that due to imposed limitations only the 5 most representative categories for each user are returned and that the user has a high interest in several of them. The categories can be arranged in order and the tie broken based on their popularity.

  ▪ Sequential patterns (40): this variable indicates if a user follows some type of repetitive behavior (pattern) in the user's browsing sequences for a specific category, taking into account the type of day on which the profile is being calculated (beginning/end of the week, month, year...) and the user's historical interest data (on a day like today, a long time ago, ... the user ...). As an example, patterns can be assumed with this variable; for example, a user "user1" visits sports pages on Mondays to see the week's football results, or the same user at the end of the month checks out offers (online commerce), or in the winter looks for ski resort trips and hotels because said user likes to ski.

- Correction module (41): this combines the values of the different time variables used (according to the dimensions that have been chosen for a requested profile) resulting from the profiling engine (33) for each user and category by applying pre-established weights that are determined on the basis of prior analytical studies on actual users whose interest can be verified through key actions clave performed while browsing (shopping pages, clicking on advertising banners, information requests...), for the purpose of obtaining a correction factor (scoring) that will modify the initial ranking assigned to the user resulting from the comparison of said user's browsing with the rest of the users. The modification of the user's ranking may (or may not) entail a change in the degree of the user's interest in some of the categories in which said user has browsed.

The calculation of the scoring or correction factor is applied to each type of profile (in the case of having calculated several according to different time components) and category independently, an interest tag (H/M/L) being obtained at the output of this embodiment of the invention for each user and type of profile, provided that the calculation thereof is enabled through the configuration module.

- Log (42): the profiles resulting from the correction module can be stored in a database so that the degree of interest of each user in a specific category is available, for example, for each day of the year and taking into account the calculation interval (time component). This profile log can be consumed by external systems (DW, or data warehouse, type systems) and can in turn be fed back into the correction factor for the calculation of some of the dimensions which depend on time variables.

- Profile upload interface (43): provides an interface capable of transferring large data volumes in order to export historical profiles from the log (42) to specific applications or external systems requiring them.

- Latest profile (44): this component is responsible for storing the most current profiles (one for each type of profile) of each user, i.e., the latest profiles calculated by the system. In addition to storage, this component responds at a high speed to petitions for profiles made by external systems, which in many cases require immediate responses, as occurs for example in behavioral targeting online advertising systems.

  - Profile application programming interface (API) (45): an easy-to-access API is enabled so that the most current profiles stored in the "latest profile" module (45) can be consumed, whereby external applications can access the information of the profiles that they request provided that they have the permissions necessary for doing so. By means of parameters included in the petitions themselves, the type of profile to be consulted and other filtering criteria can be selected in order to obtain certain user profiles specifically. This read-only API provides the flexibility necessary for the external client applications to receive at all times the profile that most suits its business, giving the profiling system outstanding potential.

- Control API (46): the configuration module is managed through an easy-to-access external API through which administrator users who have permissions can act on the dimensions to be used for the calculation of the profile and to activate or deactivate the types of profiles that can be obtained.

With regard to specific use cases of the proposed invention, several examples are described in detail below. One of the virtues of this profiling system is the capacity to offer several types of profiles that can be perfectly adapted to different businesses, whereby maximizing the possibilities of success with use thereof compared to systems offering a single profile which can sometimes be too general and sometimes not meet created expectations. This flexibility, therefore, makes the use thereof in different scenarios ideal:

- online advertising on web sites targeting users based on user behavior (interests). Going back to Figure 1, an implementation with an ad server (5) would be suitable for this case;
- Audience targeting taking into account audience preferences and likes in direct marketing advertising campaigns. Using Figure 1, to represent this case a CRM marketing system (3) would be suitable.

- Selection of advertising "referrers" (selection of web sites on which the advertising could be placed) based on the typology of users visiting them (interest profiles). Referrers are an HTTP header field identifying the address of the web page attached to the requested resource. It can be seen where the petition originated by checking the referrer. Generally, when the petition is sent to a server by clicking on a hyperlink, the referrer is also sent, which allows knowing the last page visited by the user or, in other words, the page where the user clicked on the link.
Figure 1 shows this case using a data warehouse (5).

**Claims**

1. Method for determining a user profile in relation to certain web content, according to said user's browsing data, the method is **characterized in that** it comprises the following steps performed by an electronic device:

    a) classifying the browsing data according to content categories;
    b) extracting a first set of variables from the user's web browsing data for each category;
    c) assigning the user a ranking position for each of the categories, and comparing the first set of variables with the same variables of other users;
    d) calculating at least one correction factor for the user's ranking position in each category according to one or more time variables extracted from the web browsing data;
    e) recalculating the user's ranking position for each category, taking into account the at least one correction factor calculated for each category;
    f) determining the user profile on the basis of the user's ranking position calculated for each category.

2. Method according to claim 1, which further comprises defining a time component, where the user's browsing data outside a period of time established by said time component is discarded for determining the user profile.

3. Method according to any of the preceding claims, where the first set of variables extracted from a user's web browsing data comprises data relating to: number of web pages visited by category, time and day; time consumed visiting web pages by category, time and day; and number of sessions in which web pages have been visited by category, time and day.

4. Method according to any of the preceding claims, which further comprises assigning an interest tag, including a group of scaled values, to the user according to the user's position in the ranking.

5. Method according to any of the preceding claims, which further comprises the step of filtering the browsing data before being classified by content categories, the method comprising the following steps:

    - normalizing the browsing data to a common format;
    - discarding auxiliary data from browsing data;
    - browsing data is associated with user sessions identified from user inactivity periods;
    - discarding browsing data accesses that were not requested by the user directly.

6. Method according to any of the preceding claims, where one or more time variables are chosen from the following list: relative interest, progressive disregard, scattering factor, trend, automatic thresholds, inverse visitor frequency and sequential patterns.

7. Method according to claim 6, where the relative interest of a user in a category is calculated as time consumed by the user visiting web pages from said category in relation to the total browsing time of the same user for a pre-established period.

8. Method according to any of claims 6-7, where the progressive disregard of a user for a pre-established period of time is calculated as the sum of the values of the first set of variables, weighted such that a variable has greater weight the closer it is to a moment of calculation.

9. Method according to any of claims 6-8, where the scattering factor of a user for a pre-established period of time is proportional to number of time units of the established period of time in which there is browsing activity.

10. Method according to any of claims 6-9, where the trend of a user for a pre-established period of time is calculated according to the value of the first set of variables in different time units within the pre-established time; if it is verified that the values increase upon approaching a moment of calculation, a positive factor is obtained; otherwise a negative factor is obtained.

11. Method according to any of claims 6-10, where the automatic thresholds for a category for a pre-established period of time are established according to the number of users in the ranking.

12. Method according to any of claims 6-11, where the inverse visitor frequency for a category for a pre-established period of time is calculated according to a user's visits in relation to a total number of visits to said category by the rest of users during the pre-established period of time.

13. Method according to any of claims 6-12, where the sequential patterns for a pre-established period of time are calculated by comparing the values of the first set of variables in different time patterns.

14. Electronic device for determining a user profile in relation to certain web content according to said user's browsing data, the electronic device being **characterized in that** it comprises:

- a profiling module classifying the browsing data according to content categories; extracting a first set of variables from the user's web browsing data for each category; assigning the user a ranking position for each of the categories, and comparing the first set of variables with the same variables of other users; recalculating the user's ranking position for each category, taking into account at least one correction factor calculated for each category by a correction module; and determining the user profile on the basis of the user's ranking position calculated for each category;
- a correction module calculating at least one correction factor for the user's ranking position in each category according to one or more time variables extracted from the web browsing data.

15. A computer program product comprising computer program code suitable for carrying out the method according to any of claims 1 to 13 when said program code is executed in a computer, a digital signal processor, a field-programmable gate array, an application-specific integrated circuit, a microprocessor, a microcontroller or any other form of programmable hardware.

**FIG. 1**

EP 3 082 090 A1

FIG. 2

FIG. 3

## INTERNATIONAL SEARCH REPORT

| International application No. |
|---|
| PCT/ES2013/070856 |

**A. CLASSIFICATION OF SUBJECT MATTER**

*G06Q30/02* (2012.01)
*G06Q50/32* (2012.01)
According to International Patent Classification (IPC) or to both national classification and IPC

**B. FIELDS SEARCHED**

Minimum documentation searched (classification system followed by classification symbols)
G06Q

Documentation searched other than minimum documentation to the extent that such documents are included in the fields searched

Electronic data base consulted during the international search (name of data base and, where practicable, search terms used)

EPODOC, INVENES, WPI, INTERNET

**C. DOCUMENTS CONSIDERED TO BE RELEVANT**

| Category* | Citation of document, with indication, where appropriate, of the relevant passages | Relevant to claim No. |
|---|---|---|
| X | US 2007239517 A1 (CHUNG CHRISTINA Y ET AL.) 11/10/2007, paragraph [22]; paragraph [34]; paragraphs[36 - 49]; paragraphs[63 - 70]; paragraphs[78 - 121]; paragraphs[129 - 133]; paragraph [157]; claims 5-8; figure 1, figures 3 - 12. | 1-2, 4, 6, 8-9, 11, 13-15 |
| Y | | 3, 5, 7, 10, 12 |
| Y | 01/10/2011, JAMALZADEH, MOHAMMADAMIN "Analysis of Clickstream Data", Durham theses, Durham University. October 2011. [on line] [retrieved the 2014-07-29] Retrieved from Internet: <URL: http://etheses.dur.ac.uk/3366/ >Chapters 1-2, 5-7 | 3, 5 |
| Y | US 2006041550 A1 (BENNETT DOMINIC ET AL.) 23/02/2006, paragraphs[43 - 45]; paragraph [60]; paragraphs[68 - 75]; paragraphs[81 - 87]; paragraph [101]; figures 1 - 11. figure 19, | 7, 10 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search 31/07/2014 | Date of mailing of the international search report **(04/08/2014)** |
|---|---|
| Name and mailing address of the ISA/ OFICINA ESPAÑOLA DE PATENTES Y MARCAS Paseo de la Castellana, 75 - 28071 Madrid (España) Facsimile No.: 91 349 53 04 | Authorized officer J. Vazquez Burgos Telephone No. 91 3495513 |

Form PCT/ISA/210 (second sheet) (July 2009)

## INTERNATIONAL SEARCH REPORT

| International application No. |
| --- |
| PCT/ES2013/070856 |

C (continuation).                     DOCUMENTS CONSIDERED TO BE RELEVANT

| Category * | Citation of documents, with indication, where appropriate, of the relevant passages | Relevant to claim No. |
| --- | --- | --- |
| Y | US 6564202 B1 (SCHUETZE HINRICH   ET AL.) 13/05/2003, column 3, lines 23 - 33; column 6, lines 27 - 52; column 7, lines 42 - 53; column 12, line 15 - column 13, line 7; column 17, lines 49 - 67; | 12 |
| A | US 2003171977 A1 (SINGH MAN JIT   ET AL.) 11/09/2003, paragraphs[7 - 16]; paragraphs[56 - 68]; | 1-5 |

Form PCT/ISA/210 (continuation of second sheet) (July 2009)

## INTERNATIONAL SEARCH REPORT

Information on patent family members

| International application No. |
| --- |
| PCT/ES2013/070856 |

| Patent document cited in the search report | Publication date | Patent family member(s) | Publication date |
| --- | --- | --- | --- |
| US2007239517 A1 | 11.10.2007 | NONE | |
| US6564202 B1 | 13.05.2003 | JP2011253570 A | 15.12.2011 |
| | | JP2010218579 A | 30.09.2010 |
| | | JP4768074B B2 | 07.09.2011 |
| | | JP2010267277 A | 25.11.2010 |
| | | JP4768073B B2 | 07.09.2011 |
| | | JP2010250849 A | 04.11.2010 |
| | | JP4874413B B2 | 15.02.2012 |
| | | JP2010205306 A | 16.09.2010 |
| | | JP2010262662 A | 18.11.2010 |
| | | JP4854799B B2 | 18.01.2012 |
| | | JP2000339350 A | 08.12.2000 |
| | | JP4587512B B2 | 24.11.2010 |
| | | EP2284733 A2 | 16.02.2011 |
| | | EP2284733 A3 | 25.05.2011 |
| | | EP2178008 A2 | 21.04.2010 |
| | | EP2178008 A3 | 01.09.2010 |
| | | EP2178007 A2 | 21.04.2010 |
| | | EP2178007 A3 | 25.08.2010 |
| | | EP2178006 A2 | 21.04.2010 |
| | | EP2178006 A3 | 13.04.2011 |
| | | EP1024437 A2 | 02.08.2000 |
| | | EP1024437 A3 | 21.12.2005 |
| | | US2003110181 A1 | 12.06.2003 |
| | | US6598054 B2 | 22.07.2003 |
| | | US6567797 B1 | 20.05.2003 |
| | | US6728752 B1 | 27.04.2004 |
| | | US2003074369 A1 | 17.04.2003 |
| | | US6941321 B2 | 06.09.2005 |
| | | US2003074368 A1 | 17.04.2003 |
| | | US6922699 B2 | 26.07.2005 |
| US2003171977 A1 | 11.09.2003 | US2014108096 A1 | 17.04.2014 |
| | | US2012131187 A1 | 24.05.2012 |
| | | US8356097 B2 | 15.01.2013 |
| | | US2011296014 A1 | 01.12.2011 |
| | | US8135833 B2 | 13.03.2012 |
| | | US2011015982 A1 | 20.01.2011 |
| | | US8626834 B2 | 07.01.2014 |
| | | US2010030894 A1 | 04.02.2010 |
| | | US7979544 B2 | 12.07.2011 |
| | | US2008189408 A1 | 07.08.2008 |
| | | US2008189254 A1 | 07.08.2008 |
| | | US7890451 B2 | 15.02.2011 |
| | | US2008183870 A1 | 31.07.2008 |
| | | US8095621 B2 | 10.01.2012 |
| | | US2008183869 A1 | 31.07.2008 |
| | | US8099496 B2 | 17.01.2012 |
| | | US2008183868 A1 | 31.07.2008 |
| | | US8055709 B2 | 08.11.2011 |

Form PCT/ISA/210 (patent family annex) (July 2009)

## INTERNATIONAL SEARCH REPORT

Information on patent family members

| International application No. |
|---|
| PCT/ES2013/070856 |

| Patent document cited in the search report | Publication date | Patent family member(s) | Publication date |
|---|---|---|---|
| | | US2008183718 A1 | 31.07.2008 |
| | | US7895258 B2 | 22.02.2011 |
| | | US2008183867 A1 | 31.07.2008 |
| | | US7797371 B2 | 14.09.2010 |
| | | US2008183796 A1 | 31.07.2008 |
| | | US7730120 B2 | 01.06.2010 |
| | | US2008183717 A1 | 31.07.2008 |
| | | US7814139 B2 | 12.10.2010 |
| | | US2008183664 A1 | 31.07.2008 |
| | | US2008177779 A1 | 24.07.2008 |
| | | US8769080 B2 | 01.07.2014 |
| | | US2008177778 A1 | 24.07.2008 |
| | | US2008183806 A1 | 31.07.2008 |
| | | US2008183805 A1 | 31.07.2008 |
| | | WO03077072 A2 | 18.09.2003 |
| | | WO03077072 A3 | 08.01.2004 |
| | | AU2003218009 A1 | 22.09.2003 |
| | | AU2003218009 A8 | 22.09.2003 |
| | | US8095589 B2 | 10.01.2012 |
| US2006041550 A1 | 23.02.2006 | TWI386824B B | 21.02.2013 |
| | | US2010306053 A1 | 02.12.2010 |
| | | KR20070053282 A | 23.05.2007 |
| | | WO2006099608 A2 | 21.09.2006 |
| | | WO2006099608 A3 | 04.01.2007 |
| | | US2006253432 A1 | 09.11.2006 |
| | | US8073866 B2 | 06.12.2011 |
| | | WO2006068969 A2 | 29.06.2006 |
| | | WO2006068969 A3 | 19.04.2007 |
| | | JP2008524749 A | 10.07.2008 |
| | | JP5055133B B2 | 24.10.2012 |
| | | WO2006065322 A2 | 22.06.2006 |
| | | WO2006065322 A3 | 29.11.2007 |
| | | JP2008524695 A | 10.07.2008 |
| | | EP1828927 A2 | 05.09.2007 |
| | | EP1828927 A4 | 28.05.2008 |
| | | US2006136524 A1 | 22.06.2006 |
| | | US2006136528 A1 | 22.06.2006 |
| | | US7693863 B2 | 06.04.2010 |
| | | WO2006023765 A2 | 02.03.2006 |
| | | WO2006023765 A3 | 04.05.2006 |
| | | US2006041553 A1 | 23.02.2006 |
| | | US7836009 B2 | 16.11.2010 |
| | | US8255413 B2 | 28.08.2012 |
| | | US2006041562 A1 | 23.02.2006 |
| | | US7444358 B2 | 28.10.2008 |
| | | NZ553287 A | 29.10.2010 |
| | | JP2008511057 A | 10.04.2008 |
| | | EP1779276 A2 | 02.05.2007 |

Form PCT/ISA/210 (patent family annex) (July 2009)

## INTERNATIONAL SEARCH REPORT

Information on patent family members

International application No.

PCT/ES2013/070856

| Patent document cited in the search report | Publication date | Patent family member(s) | Publication date |
|---|---|---|---|
| | | EP1779276 A4 | 29.08.2007 |
| | | CA2577841 A1 | 02.03.2006 |
| | | AU2005277210 A1 | 02.03.2006 |
| | | US2006136378 A1 | 22.06.2006 |
| | | US8078602 B2 | 13.12.2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1710743 A1
- US 20100299431 A1
- EP 1308870 A3
- US 8190475 B1
- EP 1216447 A2
- US 6539375 B2
- US 20100138370 A1